(19)

**Europäisches Patentamt**

**European Patent Office**

**Office européen des brevets**

(11) **EP 4 706 821 A1**

(12) **EUROPEAN PATENT APPLICATION**

(43) Date of publication:
**11.03.2026 Bulletin 2026/11**

(21) Application number: **24199525.7**

(22) Date of filing: **10.09.2024**

(51) International Patent Classification (IPC):
***B01J 35/57*** *(2024.01)* ***B01D 53/94*** *(2006.01)*

(52) Cooperative Patent Classification (CPC):
**B01J 35/57; B01D 53/9418; B01D 53/9436;
B01D 53/945; B01D 53/9468;** B01D 2255/1021;
B01D 2255/1023; B01D 2255/20738;
B01D 2255/20761; B01D 2255/50;
B01D 2255/9022; B01D 2255/9032;
B01D 2255/9035

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Johnson Matthey Public Limited
Company
London EC2V 7AD (GB)**

(72) Inventors:
• **BERGEAL, David
  Royston (GB)**

• **CHANDLER, Guy
  Royston (GB)**
• **GREEN, Alexander
  Royston (GB)**
• **GREENHAM, Neil
  Royston (GB)**
• **PHILLIPS, Paul
  Royston (GB)**
• **STREHLAU, Wolfgang
  Bangkok (TH)**

(74) Representative: **Johnson Matthey Plc
Intellectual Property Department
Belasis Avenue
Billingham TS23 1LB (GB)**

(54) **CATALYST**

(57) The invention relates to a catalyst comprising a substrate with a cross-sectional shape wherein the internal angle is more than 90 degrees. The substrate is coated with an ammonia slip catalyst (ASC) layer and a second layer positioned on the ASC layer, wherein the ASC layer comprises a platinum group metal (PGM) and a support, and the second layer comprises a SCR catalyst.

EP 4 706 821 A1

# Description

## Field of the invention

This invention relates to a homogeneous coating for improved ASC functionality.

## Background

Hydrocarbon combustion in combustion engines, stationary gas turbines, and other systems generates exhaust gas that must be treated to remove nitrogen oxides (NOx), which comprises NO (nitric oxide) and $NO_2$ (nitrogen dioxide), with NO being the majority of the NOx formed. NOx is known to cause a number of health issues in people as well as causing a number of detrimental environmental effects including the formation of smog and acid rain. To mitigate both the human and environmental impact from $NO_x$ in exhaust gas, it is desirable to eliminate these undesirable components, preferably by a process that does not generate other noxious or toxic substances.

Exhaust gas generated in lean-burn and combustion engines is generally oxidative. NOx needs to be reduced selectively with a catalyst and a reductant in a process known as selective catalytic reduction (SCR) that converts NOx into elemental nitrogen ($N_2$) and water. In an SCR process, a gaseous reductant, typically anhydrous ammonia, aqueous ammonia, or urea, is added to an exhaust gas stream prior to the exhaust gas contacting the catalyst. The reductant is absorbed onto the catalyst and the $NO_x$ is reduced as the gases pass through or over the catalyzed substrate. In order to maximize the conversion of NOx, it is often necessary to add more than a stoichiometric amount of ammonia to the gas stream. However, release of the excess ammonia into the atmosphere would be detrimental to the health of people and to the environment. In addition, ammonia is caustic, especially in its aqueous form. Condensation of ammonia and water in regions of the exhaust line downstream of the exhaust catalysts can result in a corrosive mixture that can damage the exhaust system. Therefore, the release of ammonia in exhaust gas should be eliminated. In many conventional exhaust systems, an ammonia oxidation catalyst (also known as an ammonia slip catalyst or "ASC") is installed downstream of the SCR catalyst to remove ammonia from the exhaust gas by converting it to nitrogen. The use of ammonia slip catalysts can allow for $NO_x$ conversions of greater than 90% over a typical diesel driving cycle.

Despite various efforts in the field, there is still a need for a better ASC catalyst with improved technical benefits.

## Summary of the Invention

## Brief Description of the Drawings

Figure 1 is a schematic of where thickness measurements can be taken to calculate the mean layer thickness of a hexagonal substrate.
Figure 2 shows a SEM image of a coated substrate with a square cross section not according to the invention

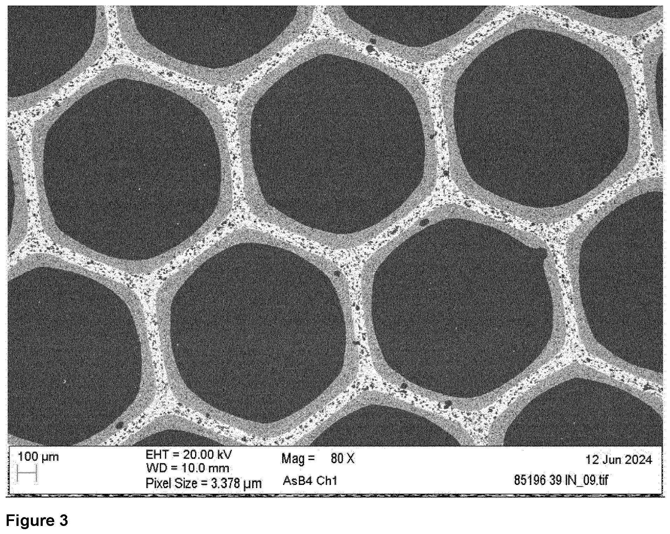

Figure 3 shows a SEM image of a coated substrate with a hexagonal cross section
Figure 4 shows the $NH_3$ conversion of Catalyst A, B and C
Figure 5 shows the NOx make of Catalyst A, B and C
Figure 6 shows the NOx conversion of Catalyst A, B and C
Figure 7 shows the NOx conversion of Catalyst D, E and F

## Detailed Description of the Invention

### Substrate

The substrate for the catalyst may be a flow-through substrate. In one embodiment, the catalyst may be coated onto the flow-through, and preferably deposited on the flow-through substrate using a washcoat procedure.

The substrate has a cross-sectional shape where the internal angle is greater than 90 degrees. For example, the cross-sectional shape can be pentagonal, hexagonal, heptagonal, octagonal, nonagonal, decagonal, oval, circular, etc. In a preferred embodiment, the cross-sectional shape is hexagonal.

The flow-through substrate is a substrate that is capable of containing catalyst/adsorber components. The substrate is preferably a ceramic substrate or a metallic substrate.

Ceramic substrates may be made of any suitable refractory material, such as cordierite, alumina, cordierite-$\alpha$ alumina, $\alpha$-alumina, silica, silicon carbide, silicon nitride, titania, ceria, zirconia, magnesia, zeolites, mullite, spodumene, alumina-silica magnesia, zirconium silicate, sillimanite, magnesium silicates, zircon, petalite, aluminosilicates, metallo-aluminosilicates, or a mixture or mixed oxide of any two or more thereof. Cordierite, a magnesium aluminosilicate, and silicon carbide are particularly preferred.

Metallic substrates may be made of any suitable metal, and in particular heat-resistant metals and metal alloys such as titanium and stainless steel as well as ferritic alloys containing iron, nickel, chromium, and/or aluminum in addition to other trace metals.

The flow-through substrate is preferably a flow-through monolith having a honeycomb structure with many small, parallel thin-walled channels running axially through the substrate and extending throughout from an inlet or an outlet of the substrate. The channel cross-section of the substrate has an internal angle greater than 90 degrees. For example, the cross-sectional shape can be pentagonal, hexagonal, heptagonal, octagonal, nonagonal, decagonal, oval, circular, etc. In a preferred embodiment, the cross-sectional shape is hexagonal. The flow-through substrate may also be high porosity which allows the catalyst to penetrate into the substrate walls.

Preferably the substrate has a plurality of fine, parallel gas flow passages extending from an inlet to an outlet face of the substrate, such that passages are open to fluid flow. Such substrates may contain up to about 700 or more flow passages (or "cells") per square inch of cross section, although far fewer may be used. For example, the substrates may have from about 7 to 600, more usually from about 100 to 400, cells per square inch ("cpsi"). The passages, which are essentially straight paths from their fluid inlet to their fluid outlet, are defined by walls onto which the catalyst layers are coated as a "washcoat" so that the gases flowing through the passages contact the catalytic material. The flow passages of the substrate (e.g. a monolithic substrate) are thin-walled channels which have a cross-sectional shape where the internal angle is greater than 90 degrees. For example, the cross-sectional shape can be pentagonal, hexagonal, heptagonal, octagonal, nonagonal, decagonal, oval, circular, etc. In a preferred embodiment, the cross-sectional shape is hexagonal.

The catalyst/adsorber may be added to the flow-through substrate by any known means, such as a washcoat procedure.

The substrate can be a high porosity substrate. The term "high porosity substrate" refers to a substrate having a porosity of between about 40% and about 80%. The high porosity substrate can have a porosity preferably of at least about 45%, more preferably of at least about 50%. The high porosity substrate can have a porosity preferably of less than about 75%, more preferably of less than about 70%. The term porosity, as used herein, refers to the total porosity, preferably as measured with mercury porosimetry.

Layer thickness

In one embodiment, the relative layer thickness deviation of the second layer with respect to the mean layer thickness of the second layer is less than 60%, e.g., less than 50%, preferably less than 40% and even more preferably less than 30%. In a particularly preferred embodiment, the relative layer thickness deviation of the second layer with respect to the mean layer thickness of the second layer is less than 25% or less than 20%.

In one embodiment, the relative layer thickness deviation of the ASC layer with respect to the mean layer thickness of the ASC layer is less than 60%, e.g., less than 50%, preferably less than 40% and even more preferably less than 30%. In a particularly preferred embodiment, the relative layer thickness deviation of the ASC layer with respect to the mean layer thickness of the ASC layer is less than 25% or less than 20%.

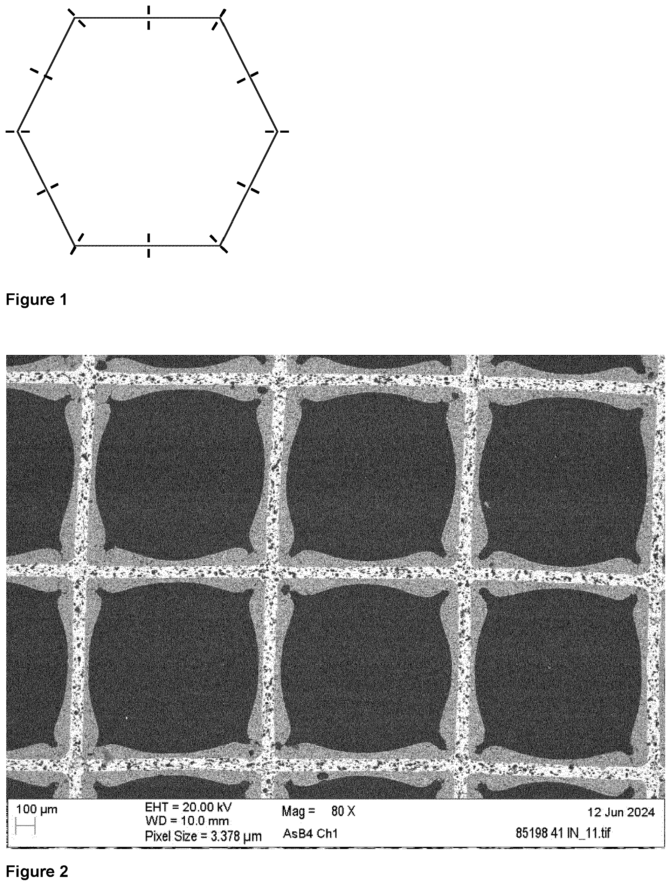

The relative layer thickness deviation is calculated by first calculating the mean layer thickness. The mean layer thickness is calculated by taking the thickness of the layer at each corner/vertex of the cross section and the thickness at the mid point between each corner/vertex, calculating the sum of these numbers and then dividing the total sum by the number of data points taken. If the cross section is circular, 8 thickness measurements are taken at 8 evenly spaced intervals. For example, Figure 1 shows a hexagonal cross section and the dashed lines show where the thicknesses are measured. The sum of all of these 12 thicknesses is calculated, and then the total sum is divided by 12 to result in a mean layer thickness.

The variance is then calculated. Firstly, calculate the deviations of each data point measured from the mean and square the result. The variance is calculated as the mean of these values (i.e., sum the squared deviations of each data point and divide by the number of data points).

The standard deviation is then calculated as the square root of the variance.

To calculate the relative layer thickness deviation as a percentage, the standard deviation is divided by the mean layer thickness and multiplied by 100.

For example, if 6 thicknesses are measured as 5, 6, 6, 4, 5 and 7.

The mean layer thickness is:

$$\frac{5+6+6+4+5+7}{6} = \frac{33}{6} = 5.5$$

The deviations of each data point and the square is:

$$(5\text{-}5.5)^2 = (\text{-}0.5)^2 = 0.25$$

$$(6\text{-}5.5)^2 = (0.5)^2 = 0.25$$

$$(6\text{-}5.5)^2 = (0.5)^2 = 0.25$$

$$(4\text{-}5.5)^2 = (\text{-}1.5)^2 = 2.25$$

$$(5\text{-}5.5)^2 = (\text{-}0.5)^2 = 0.25$$

$$(7\text{-}5.5)^2 = (1.5)^2 = 2.25$$

The variance is the mean of these values:

$$\frac{0.25+0.25+0.25+2.25+0.25+2.25}{6} = \frac{5.5}{6} = 0.92$$

The standard deviation is the square root of the variance: $\sqrt{0.92} = 0.95$

The relative layer thickness deviation is

$$\frac{0.95}{5.5} \times 100 = 17\%$$

In one embodiment, second layer has a substantially equivalent thickness along the entire cross section.

In one embodiment, ASC layer has a substantially equivalent thickness along the entire cross section.

As used herein, a thickness is substantially equivalent along the entire cross section if it is within the range from 30% to 170% of the mean layer thickness (e.g. the mean layer thickness along the cross section of the substrate as described above), preferably if it is within the range from 40% to 150% of the mean layer thickness (e.g. the mean layer thickness along the cross section of the substrate as described above), particularly preferably if it is in the range from 50% to 140% of the mean layer thickness (e.g. the mean layer thickness along the cross section of the substrate as described above).

In one embodiment, second layer has a substantially equivalent thickness on the substrate.

In one embodiment, ASC layer has a substantially equivalent thickness on the substrate.

As used herein, a thickness is substantially equivalent on the substrate if it is within the range from 30% to 170% of the mean layer thickness (e.g. the mean layer thickness along the cross section of the substrate as described above), preferably if it is within the range from 40% to 150% of the mean layer thickness (e.g. the mean layer thickness along the cross section of the substrate as described above), particularly preferably if it is in the range from 50% to 140% of the mean layer thickness (e.g. the mean layer thickness along the cross section of the substrate as described above).

In one embodiment, the second layer has a homogeneous depth profile along the entire cross section.

In one embodiment, the ASC layer has a homogeneous depth profile along the entire cross section.

As used herein, homogeneous depth profile means that the depth of the layer over the entire cross section varies by less than 60%, less than 55%, less than 50% or preferably less than 40%. The depth profile is calculated by measuring the thickness of the layer at the thickest part of the layer and the thinnest part of the layer and measuring the percentage difference between these two values.

In one embodiment, the second layer has a ratio of the corner thickness to wall thickness of less than 2.5, preferably less than 2.4, more preferably less than 2.3, even more preferably less than 2.2 and most preferably of less than 2. In some embodiments, the second layer has a ratio of the corner thickness to wall thickness of between 2 and 1, preferably between 1.9 and 1.2.

In one embodiment, the ASC layer has a ratio of the corner thickness to wall thickness of less than 2.5, preferably less than 2.4, more preferably less than 2.3, even more preferably less than 2.2 and most preferably of less than 2. In some embodiments, the ASC layer has a ratio of the corner thickness to wall thickness of between 2 and 1, preferably between 1.9 and 1.2.

In one embodiment, the total coating on the substrate has a ratio of the corner thickness to wall thickness of less than 2.5, preferably less than 2.4, more preferably less than 2.3, even more preferably less than 2.2 and most preferably of less than 2. In some embodiments, the total coating on the substrate has a ratio of the corner thickness to wall thickness of between 2 and 1, preferably between 1.9 and 1.2.

The corner thickness is calculated by measuring the thickness of the layer at each corner/vertex of the cross section, calculating the sum of these numbers and then dividing the total sum by the number of data points taken.

The wall thickness is calculated by measuring the thickness at the mid point between each corner/vertex, calculating the sum of these numbers and then dividing the total sum by the number of data points taken.

The ratio of the corner thickness to wall thickness then is calculated by dividing the corner thickness by the wall thickness.

The layer thickness can be determined by means of known layer thickness measuring methods, for example by reflectometry, ellipsometry, TEM (transmission electron microscopy), SEM (scanning electron microscopy), or using a light microscope. In a preferable embodiment, the layer thickness is determined by use of SEM.

ASC layer

The ASC layer comprises a platinum group metal (PGM). The platinum group metal refers to platinum, palladium, ruthenium, rhodium, osmium and iridium. In a preferred embodiment, the PGM may be Pt, Pd, Rh, or a combination of one or more of these, e.g., a combination of platinum and palladium. In a more preferred embodiment, the ASC comprises platinum.

When both Pt and Pd are used, the ratio of Pt:Pd can be between about 10:1 and 1:100, preferably from between about 5:1 and 1:10.

The amount (e.g. total amount) of PGM in the ASC can vary depending upon the composition of the catalyst article. For example, the PGM can be present an amount of about $0.1g/ft^3$ to about $10g/ft^3$; about $0.5g/ft^3$ to about $5g/ft^3$; about $1g/ft^3$ to about $3g/ft^3$; preferably about $1g/ft^3$ to about $10g/ft^3$ or about $1g/ft^3$ to about $5g/ft^3$. In some embodiments, the PGM is present in about $0.1g/ft^3$; about $0.5g/ft^3$; about $1g/ft^3$; about $2g/ft^3$; about $3g/ft^3$; about $4g/ft^3$; about $5g/ft^3$; about $6g/ft^3$; about $7g/ft^3$; about $8g/ft^3$; about $9g/ft^3$; or about $10g/ft^3$.

The ammonia oxidation catalyst can comprise a PGM (e.g. platinum) and one or more supports, such as a metal oxide and/or zeolite, with metal oxides being particularly preferred.

The ammonia oxidation catalyst can comprise a PGM (e.g. platinum) blended with one or more supports, a PGM mixed with one or more supports or a PGM supported on one or more supports.

In one embodiment, the ammonia oxidation catalyst can comprise a PGM (e.g., platinum) supported on one or more supports, such as a metal oxide and/or zeolite, with metal oxides being particularly preferred.

The type of support is not particularly limited provided that it is a particle having a large surface area, is inert, and is suitable for use in an after-treatment system. In some embodiments, the support may include alumina, ceria, zirconia, silica, titania, and/or Me-doped alumina or titania (where Me could be a metal from the list W, Mn, Fe, Bi, Ba, La, Ce, Zr), and physical mixtures or composites thereof, with alumina and also ceria being particularly preferred.

In certain embodiments, the supports have wide pores (e.g., 100-350 Å) or both wide and narrow pores. In certain embodiments, the support has a BET surface area of at least 50 $m^2/g$, preferably about 50-500 $m^2/g$, more preferably about 50-300 $m^2/g$, or about 150-250 $m^2/g$. Refractory metal oxide supports preferably have a pore volume of about 0.1-0.5 g/cc, for example about 0.2-0.4 g/cc, preferably measured by mercury intrusion porosimetry. The mean particle size, based on the particle count, of the support material is preferably about 0.01-10 $\mu$m, for example about 0.5-5 $\mu$m, about 0.1-1 $\mu$m, or about 5-10 $\mu$m, and preferably has a majority of the particle count within one of these ranges. In certain embodiments, the $D_{90}$ particle size of the support is within one of these ranges.

In some embodiments, the ASC may comprise a PGM supported on a molecular sieve such as a zeolite. In some embodiments, the catalyst is disposed on a high surface area support, including but not limited to alumina.

In some embodiments, the ASC may include a blend of: 1) a platinum group metal on a support, and 2) a molecular sieve. The ASC may comprise, consist essentially of, or consist of, a blend of: 1) a platinum group metal on a support, and 2) a molecular sieve. In some embodiments, the molecular sieve comprises a zeolite. In some embodiments, the molecular sieve includes a metal exchanged molecular sieve; the metal may include, for example, copper and/or iron. In some embodiments, a suitable molecular sieve includes, for example, FER, BEA, CHA, AEI, MOR, MFI, and mixtures and intergrowths thereof, preferably wherein the molecular sieve is selected from CHA, AEI, BEA or FER. The molecular sieve may include any of the molecular sieves described in detail below.

In some embodiments, the ASC may include a molecular sieve in an amount of up to about $2g/in^3$; about $0.1g/in^3$ to about $2 g/in^3$; about $0.1g/in^3$ to about $1 g/in^3$; about $0.1g/in^3$ to about $0.5g/in^3$; about $0.2g/in^3$ to about $0.5g/in^3$; about $0.1g/in^3$; about $0.2g/in^3$; about $0.3g/in^3$; about $0.4g/in^3$; about $0.5g/in^3$; about $1g/in^3$; about

$1.5g/in^3$; or about $2g/in^3$.

In some embodiments, the ASC comprises a platinum group metal distributed on a molecular sieve. The ASC may comprise, consist of, or consist essentially of, a molecular sieve based ASC formulation.

In general, a molecular sieve included in the ASC may comprise a molecular sieve having an aluminosilicate framework (e.g. zeolite), an aluminophosphate framework (e.g. AlPO), a silicoaluminophosphate framework (e.g. SAPO), a heteroatom-containing aluminosilicate framework, a heteroatom-containing aluminophosphate framework (e.g. MeAlPO, where Me is a metal), or a heteroatom-containing silicoaluminophosphate framework (e.g. MeSAPO, where Me is a metal). The heteroatom (i.e. in a heteroatom-containing framework) may be selected from the group consisting of boron (B), gallium (Ga), titanium (Ti), zirconium (Zr), zinc (Zn), iron (Fe), vanadium (V) copper (Cu) and combinations of any two or more thereof. It is preferred that the heteroatom is a metal (e.g. each of the above heteroatom-containing frameworks may be a metal-containing framework).

The description of molecular sieves herein describes molecular sieves that may be suitable as a support for a platinum group metal and/or as a component blended with a platinum group metal on support. In some embodiments, a molecular sieve present in the ASC comprises, or consists essentially of, a molecular sieve having an aluminosilicate framework (e.g. zeolite) or a silicoaluminophosphate framework (e.g. SAPO).

When the molecular sieve has an aluminosilicate framework (e.g. the molecular sieve is a zeolite), then typically the molecular sieve has a silica to alumina molar ratio (SAR) of from 5 to 200 (e.g. 10 to 200), 10 to 100 (e.g. 10 to 30 or 20 to 80), such as 12 to 40, or 15 to 30. In some embodiments, a suitable molecular sieve has a SAR of from 10 to 30, e.g., from 20 to 25. In a preferred embodiment, the SAR is from 12 to 28, e.g., from 13 to 25 or from 20 to 25. In some embodiments, a suitable molecular sieve has a SAR of > 200; > 600; or > 1200. In some embodiments, the molecular sieve has a SAR of from about 1500 to about 2100.

Typically, the molecular sieve is microporous. A microporous molecular sieve has pores with a diameter of less than 2 nm (e.g. in accordance with the IUPAC definition of "microporous" [see Pure & Appl. Chem., 66(8), (1994), 1739-1758)]).

In some embodiments, the ASC includes a molecular sieve in the H-form, ammonium-form, or metal-substituted form (e.g., Cu- substituted or Fe-substituted). In a preferred embodiment, the molecular sieve is in the ammonium-form.

A molecular sieve included in the ASC may comprise a small pore molecular sieve (e.g. a molecular sieve having a maximum ring size of eight tetrahedral atoms), a medium pore molecular sieve (e.g. a molecular sieve having a maximum ring size of ten tetrahedral atoms) or a large pore molecular sieve (e.g. a molecular sieve having a maximum ring size of twelve tetrahedral atoms) or a combination of two or more thereof.

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or an intergrowth of two or more thereof. Preferably, the small pore molecular sieve has a framework structure represented by a FTC selected from the group consisting of CHA, LEV, AEI, AFX, ERI, LTA, SFW, KFI, DDR and ITE. More preferably, the small pore molecular sieve has a framework structure represented by a FTC selected from the group consisting of CHA and AEI. The small pore molecular sieve may have a framework structure represented by the FTC CHA. The small pore molecular sieve may have a framework structure represented by the FTC AEI. When the small pore molecular sieve is a zeolite and has a framework represented by the FTC CHA, then the zeolite may be chabazite.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore molecular sieve has a framework structure represented by a FTC selected from the group consisting of FER, MEL, MFI, and STT. More preferably, the medium pore molecular sieve has a framework structure represented by a FTC selected from the group consisting of FER and MFI, particularly MFI. When the medium pore molecular sieve is a zeolite and has a framework represented by the FTC FER or MFI, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large pore molecular sieve has a framework structure represented by a FTC selected from the group consisting of AFI, BEA, MAZ, MOR, and OFF. More preferably, the large pore molecular sieve has a framework structure represented by a FTC selected from the group consisting of BEA, MOR and MFI. When the large pore molecular sieve is a zeolite and has a framework represented by the FTC BEA, FAU or MOR, then the zeolite may be a beta zeolite, faujasite, zeolite Y, zeolite X or mordenite.

In some embodiments, a platinum group metal is present on the support in an amount of about 0.1 wt% to about 10 wt% of the total weight of the platinum group metal and the support; about 0.1 wt% to about 6 wt% of the total weight of the platinum group metal and the support; about 0.1 wt% to about 5 wt% of the total weight of the platinum group metal and the support; or about 0.1 wt% to about 4 wt% of the total weight of the platinum group metal and the support.

In some embodiments, the catalyst may include an ASC composition in a first catalyst coating and an ASC composition in a second catalyst coating. In some embodiments, the ASC compositions in the first and second catalyst coatings may comprise the same formulation as each other. In some embodiments, the ASC compositions in the first and second catalyst coatings may comprise different formulations than each other.

In one embodiment, the ASC comprises platinum and alumina.

In a further embodiment, the ASC comprises platinum, alumina and FER zeolite.

In a further embodiment, the ASC comprises platinum, alumina and BEA zeolite.

The PGM component can be supported on the support. The PGM component can be incorporated onto the support by any conventional means, such as mixing an aqueous salt solution containing the metal with the support to form a metal colloid washcoat which can then be applied to the substrate. In certain embodiments, the PGM is prefixed on the support via impregnation prior to washcoat batching. Preferably, the PGM is a coating on the support.

Second layer

The second layer of the catalyst comprises a SCR catalyst. The second layer can comprise one or more SCR catalysts.

The SCR catalyst can be a molecular sieve based SCR catalyst, or a metal oxide based SCR catalyst.

The SCR catalyst may comprise, or consist essentially of, a molecular sieve based SCR catalyst. The molecular sieve based SCR catalyst comprises a molecular sieve, which is optionally a transition metal exchanged molecular sieve. It is preferable that the SCR catalyst comprises a transition metal exchanged molecular sieve.

In general, the molecular sieve based SCR catalyst may comprise a molecular sieve having an aluminosilicate framework (e.g. zeolite), an aluminophosphate framework (e.g. AlPO), a silicoaluminophosphate

framework (e.g. SAPO), a heteroatom-containing aluminosilicate framework, a heteroatom-containing aluminophosphate framework (e.g. MeAIPO, where Me is a metal), or a heteroatom-containing silicoaluminophosphate framework (e.g. MeAPSO, where Me is a metal). The heteroatom (i.e. in a heteroatom-containing framework) may be selected from the group consisting of boron (B), gallium (Ga), titanium (Ti), zirconium (Zr), zinc (Zn), iron (Fe), vanadium (V) and combinations of any two or more thereof. It is preferred that the heteroatom is a metal (e.g. each of the above heteroatom-containing frameworks may be a metal-containing framework).

The molecular sieve based SCR catalyst may comprise, or consist essentially of, a molecular sieve having an aluminosilicate framework (e.g. zeolite) or a silicoaluminophosphate framework (e.g. SAPO).

When the molecular sieve has an aluminosilicate framework (e.g. the molecular sieve is a zeolite), then typically the molecular sieve has a silica to alumina molar ratio (SAR) of from 5 to 200 (e.g. 10 to 200), preferably 10 to 100 (e.g. 10 to 30 or 20 to 80), such as 12 to 40, more preferably 15 to 30. In a preferred embodiment, the SAR is at least about 5, preferably at least about 20, with useful ranges of from about 10 to 200. In a particularly preferred embodiment, the SAR is from 5 to 30, e.g. from 10 to 28. In one embodiment, the SAR is from 12 to 18. In another embodiment, the SAR is from 18 to 22. In another embodiment, the SAR is from 22 to 28. In a particularly preferred embodiment, the SAR is from 10 to 29, from 12 to 28, from 13 to 26 or from 20 to 25.

In one embodiment, the loading of the first molecular sieve in the SCR catalyst is between 1 and 4 g/in$^3$, preferably from 1 to 3 g/in$^3$, or even more preferably between 1.8 to 2.5 g/in$^3$. In some embodiments, the loading of the first molecular sieve in the SCR catalyst is about 1 g/in$^3$, about 2 g/in$^3$, or about 3 g/in$^3$.

Typically, the molecular sieve is microporous. A microporous molecular sieve has pores with a diameter of less than 2 nm (e.g. in accordance with the IUPAC definition of "microporous" [see Pure & Appl. Chem., 66(8), (1994), 1739-1758)]).

The molecular sieve based SCR catalyst may comprise a small pore molecular sieve (e.g. a molecular sieve having a maximum ring size of eight tetrahedral atoms), a medium pore molecular sieve (e.g. a molecular sieve having a maximum ring size of ten tetrahedral atoms) or a large pore molecular sieve (e.g. a molecular sieve having a maximum ring size of twelve tetrahedral atoms) or a combination of two or more thereof.

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or an intergrowth of two or more thereof. Preferably, the small pore molecular sieve has a framework structure represented by a FTC selected from the group consisting of CHA, LEV, AEI, AFX, ERI, LTA, SFW, KFI, DDR and ITE. More preferably, the small pore molecular sieve has a framework structure represented by a FTC selected from the group consisting of CHA and AEI. The small pore molecular sieve may have a framework structure represented by the FTC CHA. The small pore molecular sieve may have a framework structure represented by the FTC AEI. When the small pore molecular sieve is a zeolite and has a framework represented by the FTC CHA, then the zeolite may be chabazite.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore molecular sieve has a framework structure represented by a FTC selected from the group consisting of FER, MEL, MFI, and STT. More preferably, the medium pore molecular sieve has a framework structure represented by a FTC selected from the group consisting of FER and MFI, particularly MFI. When the medium pore molecular sieve is a zeolite and has a framework represented by the FTC FER or MFI, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large pore molecular sieve has a framework structure represented by a FTC selected from the group consisting of AFI, BEA, MAZ, MOR, and OFF. More preferably, the large pore molecular sieve has a framework structure represented by a FTC selected from the group consisting of BEA, MOR and MFI. When the large pore molecular sieve is a zeolite and has a framework represented by the FTC BEA, FAU or MOR, then the zeolite may be a beta zeolite, faujasite, zeolite Y, zeolite X or mordenite.

The molecular sieve based SCR catalyst preferably comprises a transition metal exchanged molecular sieve. The transition metal may be selected from the group consisting of cobalt, copper, iron, manganese, nickel, palladium, platinum, ruthenium and rhenium. The transition metal may be copper. An advantage of SCR catalyst formulations containing a copper exchanged molecular sieve is that such formulations have excellent low temperature $NO_x$ reduction activity (e.g. it may be superior to the low temperature $NO_x$ reduction activity of an iron exchanged molecular sieve). Cu-SCR catalyst formulations may include, for example, Cu exchanged SAPO-34, Cu exchanged CHA zeolite, Cu exchanged AEI zeolites, Cu exchanged FER zeolites, or combinations thereof.

The transition metal may be present on an extra-framework site on the external surface of the molecular sieve or within a channel, cavity or cage of the molecular sieve.

Typically, the transition metal exchanged molecular sieve comprises the transition metal (preferably iron or copper, most preferably copper) in an amount of 0.10 to 10 wt% of the transition metal exchanged molecular sieve, preferably an amount of 0.2 to 5 wt% of the transition metal exchanged molecular sieve.

In general, the selective catalytic reduction catalyst comprises the selective catalytic reduction composition in a total loading of 0.5 to 4.0 g in$^{-3}$, preferably 1.0 to 3.0 g in$^{-3}$.

The SCR catalyst may comprise, or consist essentially of, a metal oxide based SCR catalyst. The metal oxide based SCR catalyst comprises vanadium or tungsten or a mixture thereof supported on a refractory oxide. The refractory oxide may be selected from the group consisting of alumina, silica, titania, zirconia, ceria and combinations thereof.

The metal oxide based SCR catalyst may comprise, or consist essentially of, an oxide of vanadium (e.g. $V_2O_5$) and/or an oxide of tungsten (e.g. $WO_3$) and/or an oxide of antimony (e.g. $Sb_2O_5$) supported on a refractory oxide selected from the group consisting of titania (e.g. $TiO_2$), ceria (e.g. $CeO_2$), and a mixed or composite oxide of cerium and zirconium (e.g. $Ce_xZr_{(1-x)}O_2$, wherein x = 0.1 to 0.9, preferably x = 0.2 to 0.5).

When the refractory oxide is titania (e.g. $TiO_2$), then preferably the concentration of the oxide of vanadium is from 0.5 to 6 wt% (e.g. of the metal oxide based SCR) and/or the concentration of the oxide of tungsten (e.g. $WO_3$) is from 5 to 20 wt%, and/or the concentration of the oxide of antimony (e.g. $Sb_2O_5$) is from 5 to 20 wt%. More preferably, the oxide of vanadium (e.g. $V_2O_5$) and the oxide of tungsten (e.g. $WO_3$) and/or the oxide of antimony (e.g. $Sb_2O_5$) are supported on titania (e.g. $TiO_2$).

When the refractory oxide is ceria (e.g. $CeO_2$), then preferably the concentration of the oxide of vanadium is from 0.1 to 9 wt% (e.g. of the metal oxide based SCR) and/or the concentration of the oxide of tungsten (e.g. $WO_3$) is from 0.1 to 9 wt% and/or the oxide of antimony (e.g. $Sb_2O_5$) is from 0.1 to 9 wt%.

The metal oxide based SCR catalyst may comprise, or consist essentially of, an oxide of vanadium (e.g. $V_2O_5$) and optionally an oxide of tungsten (e.g. $WO_3$) and/or an oxide of antimony (e.g. $Sb_2O_5$), supported on titania (e.g. $TiO_2$).

The SCR catalyst may comprise a mixture of a metal oxide based SCR catalyst and a molecular sieve based SCR catalyst. A suitable metal oxide based SCR catalyst may comprise, consist of, or consist essentially of, an oxide of vanadium (e.g. $V_2O_5$) and optionally an oxide of tungsten (e.g. $WO_3$) and/or an oxide of antimony (e.g. $Sb_2O_5$), supported on titania (e.g. $TiO_2$). A suitable molecular sieve based SCR catalyst may comprise a transition metal exchanged molecular sieve.

The SCR catalyst is preferably a Cu-SCR catalyst, a Fe-SCR catalyst or a mixed oxide, more preferably a Cu-SCR catalyst or a mixed oxide. The Cu-SCR catalyst comprises copper and a molecular sieve. The Fe-SCR catalyst comprises iron and a molecular sieve.

Method

In an embodiment, the present invention relates to a method of producing a catalyst (e.g., a catalyst as described herein).

In one embodiment, the method of producing the catalyst (e.g., a catalyst as herein described) comprises:

    a. providing a substrate with a cross-sectional shape where the internal angle is more than 90 degrees (e.g., a substrate as herein defined),
    b. applying an ASC layer (e.g., an ASC layer as herein described), drying and optionally calcining said ASC layer,
    c. applying a second layer (e.g., a second layer as herein described), drying and optionally calcining said second layer,

wherein said second layer comprises a SCR catalyst.

The ASC layer and/or second layer can be applied as a washcoat.

In one embodiment, a washcoat comprising a PGM and a support (e.g. the ASC layer as herein described) can be applied to the inlet and/or outlet side of the substrate using a method known in the art. After application of the washcoat, the composition can be dried and optionally calcined.

For example, a washcoat layer of a composition containing a PGM and a support (e.g., the ASC layer as herein described) may be formed by preparing a mixture or a solution of a PGM precursor (e.g. platinum precursor) in a suitable solvent (e.g. water).

Typically, a platinum precursor is utilized in the form of a compound or complex to achieve dispersion of the platinum precursor on the support. For purposes of the present invention, the term "platinum precursor" means any compound, complex, or the like which, upon calcination or initial phase of use thereof, decomposes or otherwise converts to a catalytically active form. Suitable platinum complexes or compounds include, but are not limited to platinum chlorides (e.g. salts of $[PtCl_4]^{2-}$, $[PtCl_6]^{2-}$), platinum hydroxides (e.g. salts of $[Pt(OH)_6]^{2-}$), platinum amines (e.g. salts of $[Pt(NH_3)_4]^{2+}$, $[Pt(NH_3)_4]^{4+}$), platinum hydrates (e.g. salts of $[Pt(OH_2)_4]^{2+}$), platinum bis(acetylacetonates), and mixed compounds or complexes (e.g. $[Pt(NH_3)_2(Cl)_2]$). A representative commercially-available platinum source is 99% ammonium hexachloroplatinate from Strem Chemicals, Inc., which may contain traces of other platinum group metals. However, it will be understood that this invention is not restricted to platinum precursors of a particular type, composition, or purity.

A mixture or solution of a platinum precursor can be added to the support by one of several chemical means. These include impregnation of a solution of the platinum precursor onto the support, which may be followed by a fixation step incorporating acidic component (e.g. acetic acid) or a basic component (e.g. ammonium hydroxide). This wet solid can be chemically reduced or calcined or be used as is. Alternatively, the support may be suspended in a suitable vehicle (e.g. water) and reacted with the platinum precursor in solution. Additional processing steps may include fixation by an acidic component (e.g. acetic acid) or a basic component (e.g. ammonium hydroxide), chemical reduction, or calcination.

In a further embodiment, a washcoat comprising a SCR catalyst (e.g., the second layer as herein described) can be applied to the inlet and/or outlet side of the substrate using a method known in the art. After application of the washcoat, the composition can be dried and optionally calcined.

For example, a washcoat layer of a composition containing a SCR catalyst (e.g., the second layer as herein described) may be formed by preparing a mixture or a solution of a molecular sieve on which has been distributed a metal from one or the groups VB, VIB, VIIB, VII IB, IB, or IIB of the periodic table. An exemplary metal of this series is copper or iron. Exemplary molecular sieves, include, but are not limited to zeolites having one of the following crystal structures CHA, LEV, AEI, AFX, ERI, SFW, KFI, DDR and ITE. In a particularly preferred embodiment, the molecular sieve is selected from CHA or AEI.

A suitable method for distributing the metal on the zeolite is to first prepare a mixture or a solution of the metal precursor in a suitable solvent, e.g. water. Generally, from the point of view of economics and environmental aspects, aqueous solutions of soluble compounds or complexes of the metal are preferred. For purposes of the present invention, the term "metal precursor" means any compound, complex, or the like which, can be dispersed on the molecular sieve support to give a catalytically-active metal component. For the exemplary Group IB metal copper, suitable complexes or compounds include, but are not limited to anhydrous and hydrated copper sulfate, copper nitrate, copper acetate, copper acetylacetonate, copper oxide, copper hydroxide, and salts of copper ammines (e.g. $[Cu(NH3)_4]^{2+}$). A representative commercially-available copper source is 97% copper acetate from Strem Chemicals, Inc., which may contain traces of other metals, particularly iron and nickel. However, it will be understood that this invention is not restricted to metal precursors of a particular type, composition, or purity.

The molecular sieve can be added to the solution of the metal component to form a suspension. This suspension can be allowed to react so that the copper component is distributed on the molecular sieve. This may result in copper being distributed in the pore channels as well as on the outer surface of the molecular sieve. Copper may be distributed as copper (II) ions, copper (I) ions, or as copper oxide. After the copper is distributed on the molecular sieve, the solids can be separated from the liquid phase of the suspension, washed, and dried. The resulting copper-containing molecular sieve may also be calcined to fix the copper.

To apply a washcoat layer according to one or more embodiments of the invention, finely divided particles of a catalyst (e.g., the SCR or ASC as herein described, or a mixture thereof), are suspended in an appropriate vehicle, e.g., water, to form a slurry. Other promoters and/or stabilizers and/or surfactants may be added to the slurry as mixtures or solutions in water or a water-miscible vehicle.

In one or more embodiments, the slurry is comminuted to result in substantially all of the solids having particle sizes of less than about 10 microns, i.e., in the range of about 0.1-8 microns, in an average diameter. The comminution may be accomplished in a ball mill, continuous Eiger mill, or other similar equipment.

In one or more embodiments, the suspension or slurry has a pH of about 2 to less than about 7. The pH of the slurry may be adjusted if necessary by the addition of an adequate amount of an inorganic or an organic acid to the slurry.

The solids content of the slurry may be, e.g., about 20-60 wt. %, and more particularly about 35-45 wt. %.

The substrate may then be dipped into the slurry, or the slurry otherwise may be coated on the substrate, such that there will be a desired loading of the catalyst layer deposited on the substrate. In an alternative embodiment, the slurry is coated on the substrate using vacuum coating, such that there will be a desired loading of the catalyst layer deposited on the substrate.

The coated substrate can be dried at about 100° C. and calcined by heating, e.g., at 300-650° C. for about 1 to about 3 hours. Drying and calcination are typically done in air. The coating, drying, and calcination processes may be repeated if necessary to achieve the final desired gravimetric amount of the catalyst washcoat layer on the support. In some cases, the complete removal of the liquid and other volatile components may not occur until the catalyst is placed into use and subjected to the high temperatures encountered during operation.

The washcoats described herein can be dried and calcined at a temperature within the range of 300° C. to 1200° C., preferably 400° C. to 700° C., and more preferably 450° C. to 650° C.

The calcination is preferably done under dry conditions, but it can also be performed hydrothermally, i.e., in the presence of some moisture content. Calcination can be performed for a time of between about 30 minutes and about 4 hours, preferably between about 30 minutes and about 2 hours, more preferably between about 30 minutes and about 1 hour.

The term "calcine", or "calcination", means heating the material in air or oxygen. This definition is consistent with the IUPAC definition of calcination. (IUPAC. Compendium of Chemical Terminology, 2nd ed. (the "Gold Book"). Calcination is performed to decompose a metal salt and promote the exchange of metal ions within the catalyst and also to adhere the catalyst to a substrate. The temperatures used in calcination depend upon the components in the material to be calcined and generally are between about 400° C. to about 900° C. for approximately 1 to 8 hours. In some cases, calcination can be performed up to a temperature of about 1200° C. In applications involving the processes described herein, calcinations are generally performed at temperatures from about 400° C to about 700° C for approximately 1 to 8 hours, preferably at temperatures from about 400° C to about 650° C for approximately 1 to 4 hours.

After calcining, the catalyst washcoat loading can be determined through calculation of the difference in coated and uncoated weights of the substrate. As will be apparent to those skilled in the art, the catalyst loading can be modified by altering the solids content of the coating slurry and slurry viscosity. Alternatively, repeated immersions of the substrate in the coating slurry can be conducted, followed by removal of the excess slurry as described above.

Exhaust system

In one embodiment, the invention relates to an exhaust system. An exhaust system can comprise a catalyst as herein described and a means of introducing $NH_3$ into the exhaust gas or for forming $NH_3$ in the exhaust gas.

In an exhaust system, when two or more substrates are used, one or more substrates can be located in a single housing or casing or in different housings or casings.

An exhaust system may include an SCR catalyst upstream of the catalyst as herein described. In some embodiments, the SCR catalyst is close-coupled with the catalyst as herein described. In some embodiments, the SCR catalyst and the catalyst as herein described are located on a single substrate, and the SCR catalyst is located on an inlet side of the substrate and the catalyst as herein described is located on the outlet side of the substrate.

The exhaust system may include a means for introducing $NH_3$ into the exhaust system upstream of an SCR and/or SCRF catalyst. It may be preferred that the means for introducing $NH_3$ into the exhaust gas is directly upstream of the SCR or SCRF catalyst (e.g. there is no intervening catalyst between the means for introducing $NH_3$ and the SCR or SCRF catalyst).

The $NH_3$ can be added to the flowing exhaust gas by any suitable means for introducing $NH_3$ into the exhaust gas. Suitable means include an injector, sprayer, or feeder. Such means are well known in the art.

The $NH_3$ for use in the system can be ammonia per se, hydrazine, or an ammonia precursor selected from the group consisting of urea, ammonium carbonate, ammonium carbamate, ammonium hydrogen carbonate, and ammonium formate. Urea is particularly preferred.

The exhaust system may also comprise a means for controlling the introduction of $NH_3$ into the exhaust gas in order to reduce NOx therein. Preferred control means may include an electronic control unit, optionally an engine control unit, and may additionally comprise a NOx sensor located downstream of the NO reduction catalyst.

In one embodiment, the invention relates to an engine. An engine can comprise an exhaust system (e.g., an exhaust system as herein described) comprising a catalyst as herein described and a means of introducing $NH_3$ into the exhaust gas or forming $NH_3$ in the exhaust gas. The engine can be a combustion engine on a vehicle, a combustion engine on a stationary source, or a combustion engine on a vessel, such as a ship. The combustion engine can be a diesel engine, an ammonia engine and/or a hydrogen engine.

In a further embodiment, the invention relates to a method of reducing $N_2O$ formation from $NH_3$ in an exhaust gas comprising contacting an exhaust gas comprising ammonia with the catalyst as herein described.

In a further embodiment, the invention relates to an emissions treatment system comprising a diesel engine emitting an exhaust stream including particulate matter, NOx, and carbon monoxide, and a catalytic article as described herein.

Methods of the present invention may include contacting the exhaust stream with a catalyst as described herein.

Benefits

Catalysts of the present invention may provide higher catalytic activity and selectivity.

The inventors have surprisingly found that using a substrate with a cross-sectional shape where the internal angle is more than 90 degrees allows the ASC and second layer to be applied in a homogeneous manner. This results in a homogeneous coating of the ASC and secondary layer on the substrate.

In some embodiments, catalysts of the present invention may have equivalent or enhanced high temperature SCR activity and lower secondary NOx compared to catalysts where the thickness of the catalyst layer is inhomogeneous.

The inventors have found that using homogeneous layer coatings has removed the risk of over oxidation. Without being bound by theory, this is thought to be due to reducing the Pt character of the ASC layer by providing a larger diffusion barrier in the second layer.

In some embodiments, the catalyst of the present invention may have enhanced NOx conversion compared to a catalyst article which is equivalent except uses a substrate with a cross-sectional shape where the internal angle is 90 degrees or less, the inventive catalyst showing an improvement in NOx conversion at both low and high temperatures.

The inventive catalyst also shows improvement in ammonia conversion without compromising on the NOx selectivity compared to catalysts not according to the invention. The inventors have surprisingly found that catalysts of the invention exhibit improved activity and selectivity compared to catalysts which use a substrate with a cross-sectional shape where the internal angle is 90 degrees or less.

Catalysts of the present invention may provide desirable catalytic activity and selectivity. Traditionally, catalysts use a substrate with a square cross-sectional shape. When the washcoats are applied to the substrate, the corners of the square cross-sectional shape can fill more than the rest of the shape, resulting in an inhomogeneous coating of the washcoat, resulting in a catalyst with an uneven layer thickness over the cross-sectional area of the substrate. This can affect the function of the resulting catalyst. Surprisingly, the present inventors have found that by increasing the internal angle of the cross-sectional shape can cause the washcoat to be applied in a homogeneous fashion, resulting in an even layer thickness over the cross-sectional area of the substrate. This allows the catalyst to achieve optimum activity and has resulted in improved high temperature SCR activity and lower secondary NOx.

As used in this specification and the appended claims, the singular forms "a", "an" and "the" include plural referents unless the context clearly indicates otherwise. Thus, for example, reference to "a catalyst" includes a mixture of two or more catalysts, and the like.

The term "ammonia slip", means the amount of unreacted ammonia that passes through the SCR catalyst.

When a range, or ranges, for various numerical elements are provided, the range, or ranges, can include the values, unless otherwise specified.

The term "$N_2$ selectivity" means the percent conversion of ammonia into nitrogen.

The term "platinum group metal" or "PGM" refers to platinum, palladium, ruthenium, rhodium, osmium and iridium. The platinum group metals are preferably platinum, palladium, ruthenium or rhodium, most preferably platinum or palladium.

The terms "downstream" and "upstream" describe the orientation of a catalyst or substrate where the flow of exhaust gas is from the inlet end to the outlet end of the substrate or article.

The following examples merely illustrate the invention; the skilled person will recognize many variations that are within the spirit of the invention and scope of the claims.

## Examples

### Example 1:

*Catalyst preparation:*

Various flow-through honeycomb cores were used:

Catalyst A: 4.66 inches by 3.0 inches, 400 cpsi, 4 mil wall thickness, square cross section

Catalyst B: 4.66 inches by 3.0 inches, 600 cpsi, 2 mil wall thickness, hexagonal cross section

Catalyst C: 4.66 inches by 3.0 inches, 600 cpsi, 2.5 mil wall thickness, square cross section

The flow-through honeycomb core was coated with a first oxidation catalyst from both inlet and outlet and coated approximately 50% respectively, to form a bottom layer and then coated with a second SCR catalyst (front and rear) to form a top layer over the bottom layer.

The catalyst of the bottom layer was a standard ASC bottom layer washcoat slurry containing aqueous salts (as nitrates) of platinum, an alumina support and a binder with a homogeneous loading of $2g/ft^3$. The washcoat slurry was applied to the honeycomb core as a bottom catalyst layer and the coated core dried and calcined.

The catalyst of the top layer comprised copper ion-exchanged aluminosilicate zeolite CHA and binder washcoat. This washcoat was coated over the bottom catalyst layer so that the bottom layer is completely covered, then were dried and calcined.

*SCAT Data 1*

1x3" cores were cut from the prepared catalyst of Catalyst A, Catalyst B and Catalyst C. These were aged at 650°C for 100 hours in an atmosphere of 10% water in air before being tested for $NH_3$ conversion and $N_2$ selectivity using a series of steady state points at increasing temperatures in 500ppm $NH_3$ at 180k SV (10% $O_2$, 5% water and $N_2$ balance).

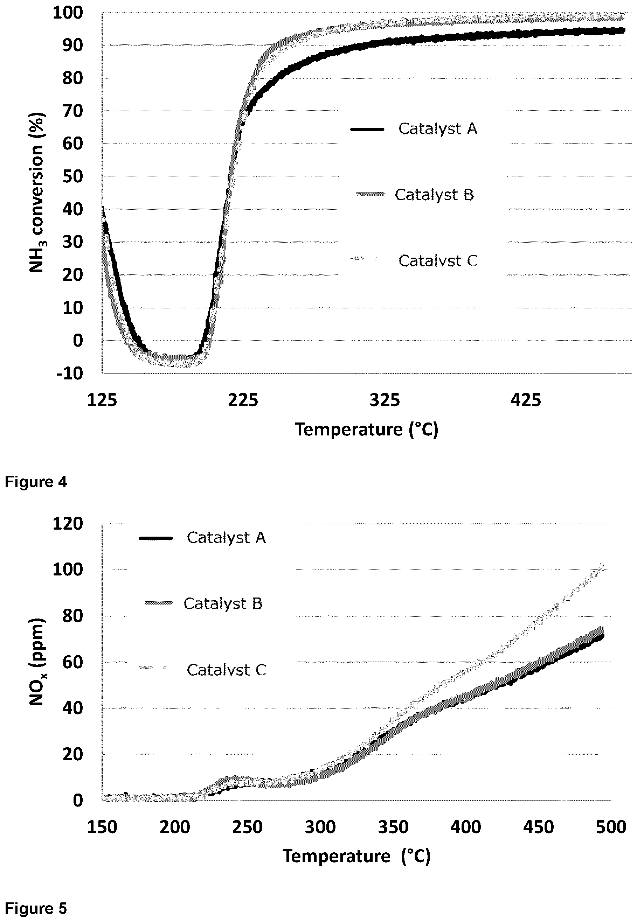

Catalyst B exhibits an improved $NH_3$ conversion over Catalyst A, and a similar $NH_3$ conversion to Catalyst C (see Figure 4), but surprisingly, Catalyst B does not exhibit the negative effect of increased NO$_x$ remake that Catalyst C exhibits (see Figure 5). Catalyst B therefore exhibits the advantageous activity of Catalyst C with the selectivity of Catalyst A.

*SCAT Data 2*

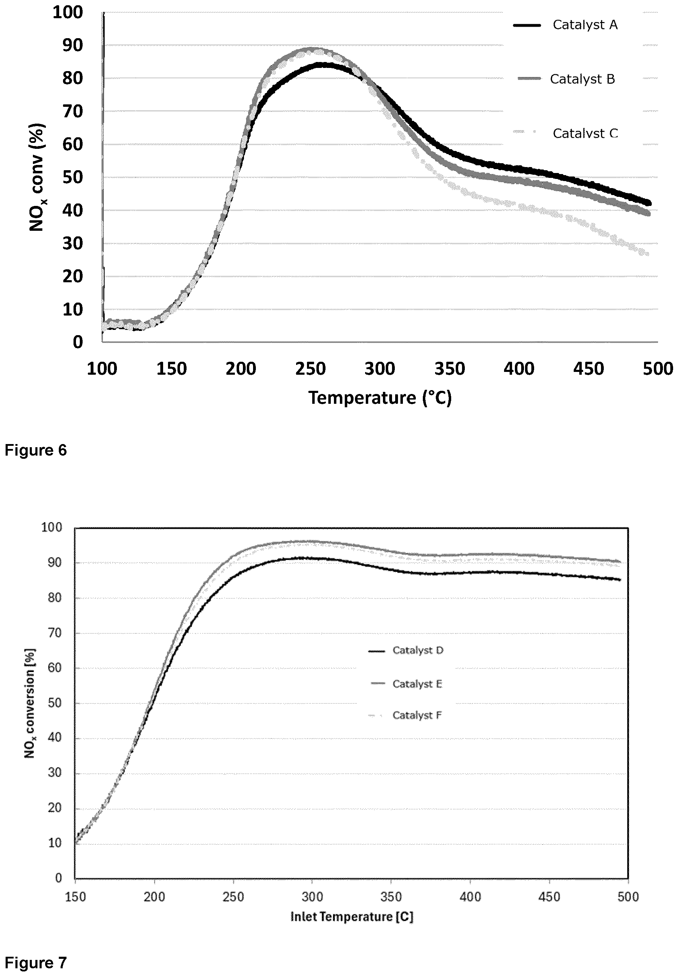

1x3" cores were cut from the prepared catalyst of Catalyst A, Catalyst B and Catalyst C. These were aged at 650°C for 100 hours in an atmosphere of 10% water in air before being tested for NH$_3$ conversion and N$_2$ selectivity using a series of steady state points at increasing temperatures in 500ppm NH$_3$, 500ppm NO and 350 ppm CO at 180k SV (10% O$_2$, 5% water and N$_2$ balance).
Catalyst B exhibits an improved NOx conversion compared to Catalyst A at low temperatures, similar to that of Catalyst C (see Figure 6). However, at high temperatures, Catalyst B exhibits improved NOx conversion compared to Catalyst C, similar to that of Catalyst A. Catalyst B therefore exhibits the advantageous conversion of Catalyst C at low temperatures, and the advantageous conversion of Catalyst A at high temperatures.

**Example 2:**

*Catalyst preparation:*

Various flow-through honeycomb cores were used:

Catalyst D: 4.66 inches by 3.0 inches, 400 cpsi, 4 mil wall thickness, square cross section

Catalyst E: 4.66 inches by 3.0 inches, 600 cpsi, 2 mil wall thickness, hexagonal cross section

Catalyst F: 4.66 inches by 3.0 inches, 600 cpsi, 2.5 mil wall thickness, square cross section

The flow-through honeycomb core was coated with a SCR catalyst (front and rear). The SCR catalyst comprised copper ion-exchanged aluminosilicate zeolite CHA and binder washcoat. This washcoat was coated over the substrate so that the substrate is completely covered, then was dried and calcined.

*SCAT Data 3*

1x3" cores were cut from the prepared catalyst of Catalyst D, Catalyst E and Catalyst F. These were aged at 650°C for 100 hours in an atmosphere of 10% water in air before being tested for NH$_3$ conversion and N$_2$ selectivity using a series of steady state points at increasing temperatures in 500ppm NH$_3$, 500ppm NO and 350 ppm CO at 180k SV (10% O$_2$, 5% water and N$_2$ balance).
Figure 7 shows that Catalyst E exhibits advantageous NOx conversion over Catalyst D, and also exhibits a similar but slightly improved NOx conversion to that of Catalyst F.

**Claims**

1. A catalyst comprising:

   a) a substrate with a cross-sectional shape wherein the internal angle is more than 90 degrees,
   b) an ammonia slip catalyst (ASC) layer positioned on the substrate,
   c) a second layer positioned on the ASC layer,

   wherein the ASC layer comprises a platinum group metal (PGM) and a support, and the second layer comprises a SCR catalyst.

2. The catalyst according to claim 1, further wherein the relative layer thickness deviation of the second layer with respect to the mean layer thickness of the second layer is less than 60%, preferably less than 50% and even more preferably less than 40%.

3. The catalyst according to any preceding claim, wherein the second layer has a substantially equivalent thickness along the entire cross section.

4. The catalyst according to any preceding claim, wherein the second layer has a ratio of the corner thickness to wall thickness of less than 2.5, preferably less than 2.4, more preferably less than 2.3, even more preferably less than 2.2 and most preferably of less than 2.

5. The catalyst according to any preceding claim, wherein the cross-sectional shape is pentagonal, hexagonal, heptagonal, octagonal, nonagonal, decagonal, oval or circular, preferably wherein the cross-sectional shape is hexagonal.

6. The catalyst according to any preceding claim, where the ASC layer is positioned directly on the substrate.

7. The catalyst according to any preceding claim, where the second layer is positioned directly on the ASC layer.

8. The catalyst according to any preceding claim, wherein the loading of the PGM in the ASC layer is between 0.5 g/ft$^3$ and 25 g/ft$^3$, preferably from 1.5 g/ft$^3$ to 20 g/ft$^3$.

9. The catalyst according to any preceding claim, wherein the PGM is selected from the group consisting of Pt, Rh and Pd or any combination thereof, preferably wherein the PGM component is platinum

**10.** The catalyst according to any preceding claim, wherein the SCR catalyst comprises a transition metal and a first molecular sieve, preferably wherein the first molecular sieve is selected from CHA or AEI, or a blend of CHA and AEI.

**11.** The catalyst according to claim 10, wherein the transition metal is Cu or Fe, preferably wherein it is Cu.

**12.** The catalyst according to claim 10 or claim 11, wherein the first molecular sieve has a silica-to-alumina ratio of 10 to 30, preferably 20 to 25.

**13.** The catalyst according to any one of claims 10 to 12, wherein the loading of the first molecular sieve in the SCR catalyst is between 1 and 4 g/in$^3$, preferably between 1.8 to 2.5 g/in$^3$.

**14.** A method for forming a catalyst composition (e.g. one as described in any preceding claim), said method comprising:

> a. providing a substrate with a cross-sectional shape wherein the internal angle is more than 90 degrees,
> b. applying an ASC layer, drying and optionally calcining said ASC layer,
> c. applying a second layer, drying and optionally calcining said second layer, wherein said second layer comprises a SCR catalyst.

**15.** An emission treatment system for treating a flow of a combustion exhaust gas comprising the catalyst according to any one of claims 1 to 13, preferably further comprising a DOC, a DPF, at least one additional SCR, at least one additional ASC, or a combination thereof.

**Figure 1**

| 100 μm | EHT = 20.00 kV | Mag = 80 X | 12 Jun 2024 |
| | WD = 10.0 mm | | |
| | Pixel Size = 3.378 μm | AsB4 Ch1 | 85198 41 IN_11.tif |

**Figure 2**

100 µm | EHT = 20.00 kV | Mag = 80 X | 12 Jun 2024
WD = 10.0 mm
Pixel Size = 3.378 µm | AsB4 Ch1 | 85196 39 IN_09.tif

**Figure 3**

Figure 4

Figure 5

Figure 6

Figure 7

Europäisches
Patentamt
European
Patent Office
Office européen
des brevets

# EUROPEAN SEARCH REPORT

**Application Number**

EP 24 19 9525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/183457 A1 (JOHNSON MATTHEY PLC [GB]; LU JING [US]) 4 October 2018 (2018-10-04) * claims; figures; examples * * page 17, lines 20-25 * ----- | 1-15 | INV. B01J35/57 B01D53/94 |
| X | WO 2019/178303 A1 (JOHNSON MATTHEY PLC [GB]; CHEN HAI YING [US]) 19 September 2019 (2019-09-19) * claims; figures; examples * * page 15, lines 13-18 * ----- | 1-15 | |

**TECHNICAL FIELDS SEARCHED (IPC)**

B01J
B01D

The present search report has been drawn up for all claims

| Place of search | Date of completion of the search | Examiner |
|---|---|---|
| The Hague | 13 February 2025 | Schoofs, Bart |

EPO FORM 1503 03.82 (P04C01)

## ANNEX TO THE EUROPEAN SEARCH REPORT
## ON EUROPEAN PATENT APPLICATION NO.

EP 24 19 9525

13-02-2025

| Patent document cited in search report | Publication date | Patent family member(s) | | Publication date |
|---|---|---|---|---|
| WO 2018183457 A1 | 04-10-2018 | BR | 112019020264 A2 | 22-04-2020 |
| | | CN | 110582342 A | 17-12-2019 |
| | | DE | 102018107549 A1 | 04-10-2018 |
| | | EP | 3600624 A1 | 05-02-2020 |
| | | GB | 2562879 A | 28-11-2018 |
| | | GB | 2595988 A | 15-12-2021 |
| | | GB | 2595989 A | 15-12-2021 |
| | | GB | 2595990 A | 15-12-2021 |
| | | JP | 7241692 B2 | 17-03-2023 |
| | | JP | 2020515399 A | 28-05-2020 |
| | | RU | 2019134052 A | 29-04-2021 |
| | | US | 2018280945 A1 | 04-10-2018 |
| | | US | 2020215520 A1 | 09-07-2020 |
| | | WO | 2018183457 A1 | 04-10-2018 |
| WO 2019178303 A1 | 19-09-2019 | BR | 112020017976 A2 | 22-12-2020 |
| | | CN | 111801164 A | 20-10-2020 |
| | | EP | 3765190 A1 | 20-01-2021 |
| | | GB | 2573391 A | 06-11-2019 |
| | | JP | 7462563 B2 | 05-04-2024 |
| | | JP | 2021517858 A | 29-07-2021 |
| | | RU | 2020131781 A | 28-03-2022 |
| | | US | 2019283011 A1 | 19-09-2019 |
| | | WO | 2019178303 A1 | 19-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Pure & Appl. Chem.*, 1994, vol. 66 (8), 1739-1758

- IUPAC. Compendium of Chemical Terminology. Gold Book